(19) Europäisches Patentamt
European Patent Office
Office européen des brevets

(11) Veröffentlichungsnummer: **0 135 131**
**B1**

(12) # EUROPÄISCHE PATENTSCHRIFT

(45) Veröffentlichungstag der Patentschrift: **05.11.86**

(51) Int. Cl.⁴: **C 09 B 29/42** // C09B29/039, C08K5/23, D06P1/18

(21) Anmeldenummer: **84109602.7**

(22) Anmeldetag: **13.08.84**

(54) **Isothiazolazofarbstoffe.**

(30) Priorität: **20.08.83 DE 3330155**

(43) Veröffentlichungstag der Anmeldung: **27.03.85 Patentblatt 85/13**

(45) Bekanntmachung des Hinweises auf die Patenterteilung: **05.11.86 Patentblatt 86/45**

(84) Benannte Vertragsstaaten: **CH DE FR GB IT LI**

(56) Entgegenhaltungen:
**EP-A-0 087 677**
**DE-A-2 062 717**
**DE-C-840 545**
**FR-A-2 203 853**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch- Strasse 38, D-6700 Ludwigshafen (DE)**

(72) Erfinder: **Loeffler, Hermann, Haydnstrasse 23, D-6720 Speyer (DE)**
Erfinder: **Schefczik, Ernst, Dr., Dubliner Strasse 7, D-6700 Ludwigshafen (DE)**

**EP 0 135 131 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

In der DE-A-2 062 717 und der FR-A-2 203 853 werden Azofarbstoffe auf Basis von 2,6-Diaminopyridin beschrieben, die als Diazokomponente u.a. Derivate von 3-Amino-2,1-benzisothiazol aufweisen. Es hat sich gezeigt, daß die Ausfärbungen solcher Farbstoffe in Polyestergewebe und in Polystyrol Schwächen auiweisen.

Aminopyridinazofarbstoffe mit Derivaten von 3-Amino-2,1-benzisothiazol als Diazokomponente sind auch in der EP-A-84 150 aufgeführt.

Gegenstand der EP-A-31 505 sind Monoazofarbstoffe der Aminopyridinreihe, deren Diazokomponente durch Oxdiazol oder Thiadiazol substituierte Anilinderivate sind.

Schließlich beschreibt die ältere Anmeldung EP-A-87 677 Isothiazolazofarbstoffe, die solche Kupplungskomponenten aufweisen, die von Diaminopyridin verschieden sind.

Die Erfindung betrifft Verbindungen der allgemeinen Formel

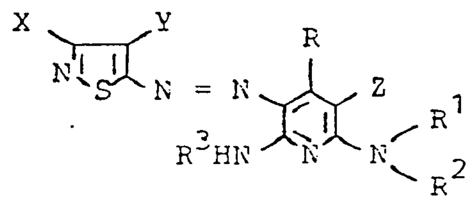

in der

X gegebenfalls substituiertes Alkyl, Cykloakyl, Aralkyl oder Aryl,

Y Chlor, Brom, Carbamoyl oder Cyan,

Z Wasserstoff, Carbamoyl, Cyan oder Acetyl,

R Wasserstoff oder $C_1$- bis $C_3$-Alkyl, $R^1$ und $R^3$ unabhängig voneinander Wasserstoff oder gegebenenfalls substituiertes Alkyl, Alkenyl, Cycloalkyl, Aralkyl oder Aryl,

$R^2$ Wasserstoff oder gegebenenfalls substituiertes Alkyl und

$R^1$ und $R^2$ zusammen mit dem Stickstoff ein gesättigter 5-oder 6-Ring sind.

Reste X sind z. B:

$C_1$- bis $C_8$-Alkyl, das noch durch Chlor, Brom, Cyan, Hydroxy, $C_1$- bis $C_4$-Alkoxy, phenoxy, $C_1$- bis $C_8$-Alkoxycarbonyl, gegebenenfalls substituiertes phenyl, Carbamoyl oder Amino substituiert sein kann, $C_5$- bis $C_7$-Cycloalkyl oder gegebenenfalls durch Fluor, Chlor, Brom, $C_1$- bis $C_4$-Alkyl oder -Alkoxy substituiertes Phenyl.

Einzelne Reste X sind beispielsweise:

$CH_3$, $C_2H_5$, $C_3H_7$, $(CH_3)_2CH$, $C_4H_9$, $(CH_3)_2CHCH_2$, $C_5H_{11}$, $C_6H_{13}$ $C_7H_{15}$, $C_4H_9CH(C_2H_5)CH_2$, $CNCH_2$, $CNC_2H_4$, $ClC_2H_4$, $BrC_2H_4$, $HOC_2H_4$, $CH_3OC_2H_4$, $C_2H_5OC_2H_4$, $C_3H_7OC_2H_4$, $C_4H_9OC_2H_4$, $C_4H_9OC_2H_4OC_2H_4$, $C_6H_{13}OC_2H_4$, $C_6H_5OC_2H_4$, $(CH_3)_2NC_2H_4$, $CH_3OOCCH_2$, $C_2H_5OOCCH_2$, $(CH_3)_2NCOCH_2$, $(C_2H_5)_2NCOCH_2$,

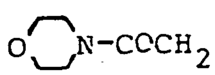, 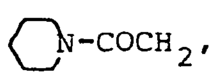, 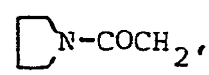, $CH_3OOCC_2H_4$,

$C_2H_5OOCC_2H_4$, 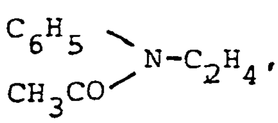, 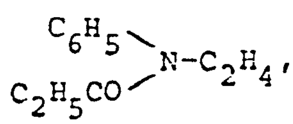, $C_6H_5SO_2CH_2$,

$C_6H_5CH_2$, $C_6H_5C_2H_4$, 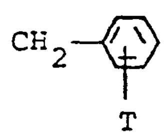, $C_6H_5$ oder 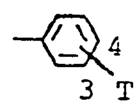, wobei

T = F, Cl, Br, $CH_3$, $OCH_3$ oder $OC_2H_5$ ist.

Reste $R^1$ und $R^3$ sind z.B:

1. Gegebenenfalls substituierte Alkylreste, wie $CH_3$, $C_2H_5$,

$C_3H_7-(n)$, $CH(CH_3)_2$, $C_4H_9-(n)$, $CH_2-CH(CH_3)_2$,

$\overset{CH_3}{\overset{|}{CH}}-C_2H_5$, $C_5H_{11}-(n)$, $\underset{CH_3}{\underset{|}{CH}}-CH(CH_3)_2$, $CH(C_2H_5)_2$, $\overset{CH_3}{\overset{|}{CH}}-C_3H_7$,

$\underset{CH_3}{\underset{|}{CH}}-\underset{CH_3}{\underset{|}{CH}}-CH_3$, $C_2H_4-CH(CH_3)_2$, $CH_2-\overset{CH_3}{\overset{|}{\underset{CH_3}{\underset{|}{C}}}}-CH_3$, $C_6H_{13}$, $C_7H_{15}$,

$\underset{C_2H_5}{\underset{|}{CH}}-C_4H_9$, $CH(C_3H_7)_2$, $CH\begin{smallmatrix}\diagup CH(CH_3)_2\\ \diagdown CH(CH_3)_2\end{smallmatrix}$, $\underset{CH_3}{\underset{|}{CH}}-C_2H_4-CH(CH_3)_2$,

$C_8H_{17}$, $CH_2-\underset{C_2H_5}{\underset{|}{CH}}-C_4H_9$, $\underset{CH_3}{\underset{|}{CH}}-C_3H_6-CH(CH_3)_2$, $C_9H_{18}$, $C_{10}H_{21}$,

$C_{12}H_{25}$, $C_{13}H_{27}$;

$C_2H_4OH$, $C_3H_6OH$, $CH_2-\underset{CH_3}{CH}-OH$, $\underset{CH_3}{CH}-CH_2-OH$, $C_4H_8OH$, $\overset{CH_3}{CH}-C_2H_4-OH$, $\overset{C_2H_5}{CH}-CH_2-OH$, $C_6H_{12}OH$, $\underset{CH_3}{CH}-C_3H_6\underset{OH}{C}(CH_3)_2$;

$C_2H_4OCH_3$, $C_2H_4OC_2H_5$, $C_2H_4OC_3H_7$, $C_2H_4OC_4H_9$, $C_2H_4OC_6H_5$, $C_2H_4OC_6H_{11}$, $C_2H_4CN$, $C_5H_{10}CN$, $C_6H_{12}CN$, $C_2H_4OC_2H_4CN$, $C_3H_6OC_2H_4CN$, $C_3H_6OCH_3$, $C_3H_6OC_2H_5$, $C_3H_6OC_3H_7$, $C_3H_6OC_4H_9$, $C_3H_6OCH_2-\overset{C_2H_5}{CH}-C_4H_9$, $C_3H_6OC_6H_{13}$, $C_3H_6OC_8H_{17}$, $C_3H_6OCH_2C_6H_5$, $C_3H_6OC_2H_4C_6H_5$, $C_3H_6OC_2H_4OC_6H_5$, $C_3H_6OC_6H_5$, $C_3H_6OC_2H_4OH$, $C_3H_6OC_4H_8OH$, $C_3H_6OC_2H_4OCH_3$, $C_3H_6OC_2H_4OC_2H_5$, $C_3H_6OC_2H_4OCH(CH_3)_2$, $C_3H_6OC_2H_4OC_4H_9$, $C_3H_6OC_2H_4OCH_2C_6H_5$, $C_3H_6OC_2H_4OC_6H_5$, $C_3H_6OC_2H_4OC_6H_{11}$, $\underset{CH_3}{CH}-CH_2OCH_3$, $\underset{CH_3}{CH}CH_2OC_4H_9$, $\underset{CH_3}{CH}-CH_2OC_6H_5$, $\underset{CH_3}{CH}CH_2OCH_2C_6H_5$, $\underset{CH_3}{CH}-C_2H_4OCH_3$, $\underset{C_2H_5}{CH}-CH_2-OCH_3$, $\underset{CH_3}{CH}-CH(OCH_3)_2$, $CH_2\underset{CH_3}{CH}OCH_3$, $CH_2-\underset{CH_3}{CH}-OC_2H_5$, $CH_2-\underset{CH_3}{CH}OC_4H_9$, $CH_2-\underset{CH_3}{CH}-OC_6H_5$ sowie die entsprechenden Reste, in denen die Gruppierungen $C_2H_4O$, $C_3H_6O$, $\underset{CH_3}{CH}-CH_2O$ und $CH_2-\underset{CH_3}{CH}O$ zweimal vorhanden sind;

$C_3H_6O\underset{CH_3}{CH}-CH_2OCH_3$, $C_3H_6O\underset{CH_3}{CH}OC_2H_5$, $C_3H_6OCH_2\underset{CH_3}{CH}OCH_3$ und

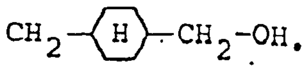.

2. Gegebenenfalls substuierte Cycloalkylreste:

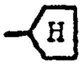 , 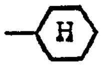 , 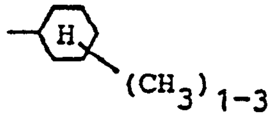 , 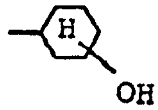

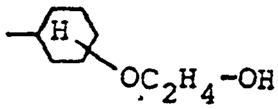 , 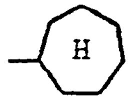 , 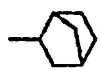 und 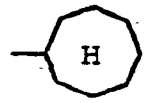 ,

3. Gegebenenfalls substituierte Aralkylreste:

$CH_2-C_6H_5$, $C_2H_4-C_6H_5$, $CH_2\overset{CH_3}{CH}-C_6H_5$, $\overset{CH_3}{C}HC_2H_4-C_6H_5$, $C_2H_4\overset{CH_3}{CH}-C_6H_5$,
$CH_2\underset{OH}{CH}-C_6H_5$, $\overset{C_2H_5}{CH}-C_6H_5$, $\overset{C_3H_7}{CH}-C_6H_5$ und $C_6H_4CH_3$ und $C_6H_4OCH_3$
anstelle von $C_6H_5$;

4. Gegebenenfalls substituierte phenylreste:

$C_6H_5$, $C_6H_4CH_3$, $C_6H_3(CH_3)_2$, $C_6H_4OCH_3$, $C_6H_3(OCH_3)_2$, $C_6H_4Cl$ und $C_6H_2(OCH_3)_2Cl$;

5. Die Reste:

$CH_2CH=CH_2$, $CH_2COOCH_3$, $(CH_2)_5COOCH_3$,
$(CH_2)_5COOC_2H_5$, $(CH_2)_5COOC_4H_9$,
$(CH_2)_5COOCH_2\overset{C_2H_5}{\underset{C_4H_9}{CH}}$, $(CH_2)_n-$ 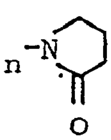 , wobei n = 2, 3, 4 oder 6

ist.

6. Acyloxyreste:

$(CH_2)_2OCHO$, $(CH_2)_2OCOCH_3$, $(C_2H_4O)_2CHO$, $(C_2H_4O)_2COCH_3$, $(CH_2)_2OCOC_3H_7$,

$(CH_2)_2OCOCH\begin{smallmatrix}C_2H_5\\C_4H_9\end{smallmatrix}$, $(CH_2)_2OCOC_6H_5$, $(CH_2)_2OCOC_6H_4CH_3$,

$(CH_2)_2OCOC_6H_4Cl$, $(CH_2)_2OCOC_{10}H_7$, $(CH_2)_2OCONHCH_3$,

$(CH_2)_2OCONHC_4H_9$, $(CH_2)_2OCONHCH_2\overset{C_2H_5}{\underset{C_4H_9}{CH}}$, $(CH_2)_2OCONHC_6H_5$,

$(CH_2)_2OCONHC_6H_4Cl$, $(CH_2)_2OCONHC_6H_3Cl_2$ sowie die entsprechenden Reste mit jeweils $(CH_2)_3$, $(CH_2)_4$ oder $(CH_2)_6$ anstelle von $(CH_2)_2$.

7. Acylreste:

$CHO$, $CH_3CO$, $C_2H_5CO$, $C_3H_7CO$, $C_4H_9\underset{C_2H_5}{CH}-CO$, ~~$C_2H_5CO$,~~
$CH_3C_6H_4CO$, $C_6H_5CH_2CO$, $C_6H_5OCH_2CO$, $CH_3SO_2$, $C_2H_5SO_2$, $C_6H_5SO_2$ oder $CH_3C_6H_4SO_2$.

Bevorzugte Substituenten sind beispielsweise:
Wasserstoff,

$C_2H_5$, $CH(CH_3)_2$, $C_4H_9-(n)$, $CH_2-CH(CH_3)_2$,
$\underset{CH_3}{CH}-C_2H_5$, $\underset{CH_3}{CH}-CH(CH_3)_2$, $CH(C_2H_5)$, $\underset{CH_3}{CH}-C_3H_7$, $C_6H_{13}$, $\underset{C_2H_5}{CH}-C_4H_9$,
$CH(C_3H_7)_2$, $\underset{CH_3}{CH}-C_2H_4-CH(CH_3)_2$, $C_8H_{17}$, $CH_2-\underset{C_2H_5}{CH}-C_4H_9$,
$\underset{CH_3}{CH}-C_3H_6-CH(CH_3)_2$, $C_2H_4OH$, $C_3H_6OH$, $\underset{CH_3}{CH}-CH_2OH$, $\underset{CH_3}{CH}-C_2H_4OH$,
$\underset{C_2H_5}{CH}-CH_2OH$, $\underset{CH_3}{CH}-C_3H_6-\underset{OH}{C}(CH_3)_2$, $C_2H_4OC_2H_4OH$, $C_3H_6OC_4H_8OH$,
$C_3H_6OCH_2C_6H_5$, $C_3H_6OC_2H_4OC_6H_5$, $C_2H_4OCH_3$, $C_2H_4OC_2H_5$,
$C_2H_4OC_4H_9$, $C_3H_6OCH_3$, $C_3H_6OC_2H_5$, $C_3H_6OC_4H_9$, $C_3H_6OC_2H_4OCH_3$,
$C_3H_6OC_2H_4OC_2H_5$, $C_3H_6OCH_2\overset{C_2H_5}{C}HC_4H_9$, $\overset{CH_3}{C}H-CH_2OCH_3$, $\overset{C_2H_5}{C}H-CH_2OCH_3$

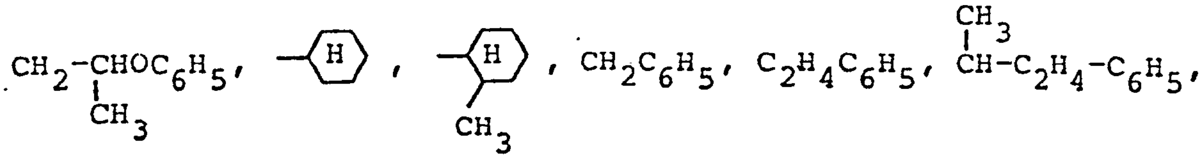

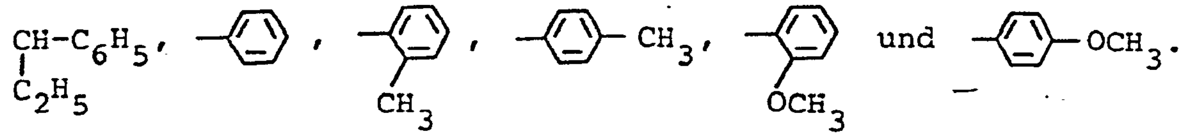

Reste $R^2$ sind neben Wasserstoff z.B:

$CH_3$, $C_2H_5$, $CH(CH_3)_n$, $C_3H_7$, $C_4H_9$, $CH(CH_3)-C_2H_5$, $CH_2-CH(CH_3)_2$, $CH_2-CH(CH_3)-OH$, $C_2H_4OH$, $C_3H_6OH$, $C_2H_4OCH_3$, $C_3H_6OCH_3$, $C_6H_{13}$ und $CH_2CH(C_2H_5)-C_4H_9$.

Reste $R^1$, $R^2$ zusammen mit dem Stickstoff sind beispielsweise:

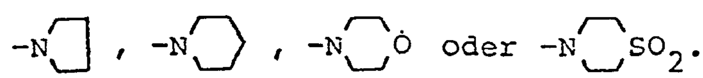

Die Verbindungen der Formel 1 eignen sich je nach ihrer Struktur z. B. als Dispersionsfarbstoffe für synthetische Polyester, als Transferfarbstoffe, zum Färben thermoplastischer Kunststoffmassen aus z. B. Polystyrol, Polyethylen, Polypropylen, Polyamid und deren Blockpolymeren sowie auch zum Färben von Baumwolle und Mischgeweben aus Baumwolle und Polyestern, z. B. nach dem in der DE-pS 18 11 796 angegebenen Verfahren.

Man erhält in der Regel sehr echte Färbungen und Drucke.

Von besonderer Bedeutung sind Verbindungen der Formel 1 a

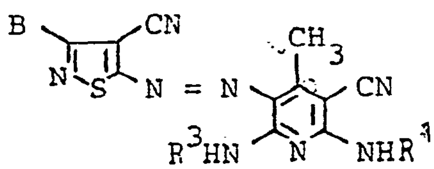

in der

B Methyl, Isopropyl oder gegebenenfalls durch Methyl, Methoxy, Chlor oder Brom substituiertes Benzyl oder Phenyl ist und

$R^1$ und $R^3$ die angegebene Bedeutung haben.

$R^1$ st vorzugsweise gegebenenfalls durch Methyl, Methoxy, Chlor oder Brom substituiertes Phenyl.

Besonders bevorzugt sind die Farbstoffe der Formel 1 a,

in der

B und $R^1$ einen gegebenenfalls durch Methyl, Methoxy, Chlor oder Brom substituierten Phenylrest und

$R^3$ einen der vorstehend genannten über ein sekundäres C-Atom an die Aminogruppe gebundenen Rest bedeuten.

Zur Herstellung der Verbindungen der Formel 1 kann man eine Diazoniumverbindung von Aminen der Formel

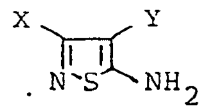

mit einer Kupplungskomponente der Formel

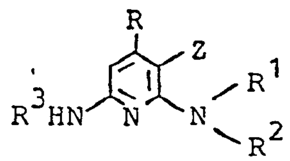

nach an sich bekannten Methoden umsetzen.

Einzelheiten der Umsetzungen können den Beispielen entnommen werden, in denen sich Angaben über Teile und Prozente, sofern nicht anders vermerkt, auf das Gewicht beziehen.

**Beispiel 1**

20,1 Teile 5-Amino-4-cyan-3-phenyl-isothiazol werden in einem Gemisch aus 150 Raumteilen Eisessig/Propionsäure 17: 3 und 70 Teilen 80 %iger Schwefelsäure angerührt und bei 15/20°C langsam mit 32 Teilen Nitrosylschwefelsäure (11,5 % $N_2O_3$) versetzt. Man rührt drei Stunden bei 15/20°C und bei Überschuß an salpetriger Säure nach und rührt weitere 15 Minuten in Gegenwart von 5 Teilen Harnstoff. Die so erhaltene Diazolösung läßt man nun unter Rühren in eine Lösung von 34 Teilen 2-(2-Methoxy)-phenylamino-3-cyan-4-methyl-6-cyclohexylamino-pyridin, in 300 Raumteilen Eisessig und 150 Raumteilen Dimethylformamid einfließen und rührt ca. 30 Minuten bei 15°C nach, bis die Kupplung beendet ist. Durch Absaugen und Waschen mit 300 Raumteilen Eisessig und mit heißem Wasser wird der Farbstoff der Formel

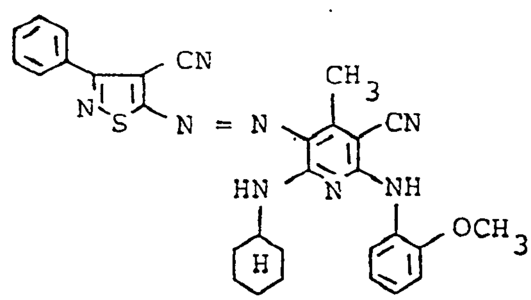

als wäßrige paste erhalten (λ max. = 533 nm). Mit einer Zubereitung aus 6 Teilen dieses Farbstoffes ber. trocken, 80 Teilen eines Polyethylenglykols vom Molekulargewicht 1500, 20 Teilen eines Umsetzungsproduktes aus 1 Mol Hexamethylendiamin und 15 Mol Ethylenoxid und 894 Teilen Wasser wird bei pH = 6 ein Mischgewebe aus 63 Teilen Polyester und 37 Teilen Baumwolle imprägniert. Das imprägnierte Gewebe wird bei 110°C getrocknet und darauf während 5 Minuten mit Heißluft von 215°C behandelt. Man spült kalt und behandelt die Färbung bei 100°C mit einem handelsüblichen Waschmittel. Man erhält so eine brillante, blaustichig rote Färbung mit sehr guten Licht-, Wasch-, Lösungsmittel- und Reibechtheiten.

**Beispiel 2**

Werden gemäß den Herstellungsbedingungen des Beispiels 1 20,1 Teile 5-Amino-4-cyan-3-phenyl-isothiazol diazotiert und auf 32 Teile 2-(2-Ethyl-hexoxi)-3'-propylamino-3-cyan-4-merhyl-6-amino-pyridin gekuppelt, so resultiert ein Farbstoff der Formel

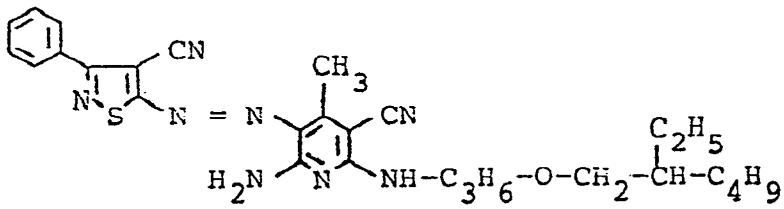

(λ max. 511 nm)

Man bedruckt ein Mischgewebe aus Polyester/Baumwolle mit einer Zubereitung, die aus 10 Teilen des Farbstoffes aus Beispiel 2, 100 Teilen des Umsetzungsproduktes aus Polyethylenoxid vom Molekulargewicht 300 mit Borsäure im Molverhältnis 3: 1, 30 Teilen Ölsäurediethanolamid und 860 Teilen einer 3 %igen Alginatverdickung besteht und trocknet den Druck bei 110°C. Darauf behandelt man 5 Minuten bei 185 °C mit Heißdampf, spült kalt und seift bei 100°C mit einem handelsüblichen Waschmittel. Man erhält einen licht-, wasch- und lösungsmittelechten rotorangefarbenen Druck auf weißem Fond.

Auf einem Gewebe aus reiner Baumwolle wird nach dem gleichen Verfahren ein farbgleicher Druck mit gleich guten Echtheiten erhalten.

Analog werden die Farbstoffe der folgenden Tabelle erhalten, die bevorzugt nach den angegebenen Verfahren auf Polyester und Polyester-Baumwolle-Mischungen, teilweise auch auf reiner Baumwolle, Färbungen und Drucke mit hohem Echtheitsniveau liefern.

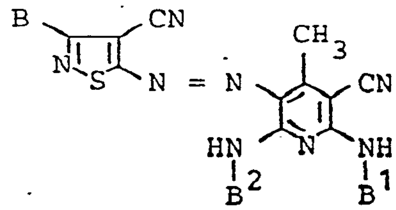

| Bsp. Nr. | B | $B^1$ | $B^2$ | λ max. |
|---|---|---|---|---|
| 3 | 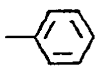 | 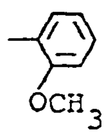 | 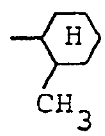 | 532,5 |
| 4 | " | " | 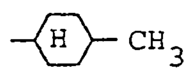 | 533 |
| 5 | " | 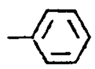 | 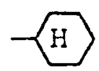 | 536 |
| 6 | " | " | 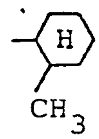 | 535 |
| 7 | " | 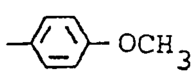 | 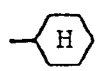 | 538,5 |
| 8 | " | " | 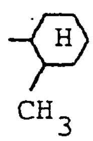 | 538 |
| 9 | 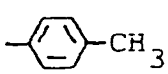 | 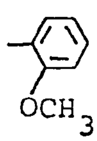 | 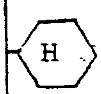 | 532,5 |
| 10 | 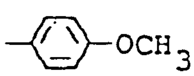 | " | " | 532,5 |
| 11 | " | " | 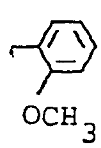 | 538,5 |

| Bsp. Nr. | B | $B^1$ | $B^2$ | λmax. |
|---|---|---|---|---|
| 12 | 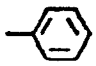 | 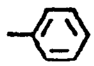 | CH-CH$_2$-OCH$_3$<br>C$_2$H$_5$ | 534 |
| 13 | " | 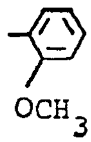 | " | 532,5 |
| 14 | " | " | CH(CH$_3$)$_2$ | 533 |
| 15 | " | " | CH-C$_3$H$_6$CH(CH$_3$)$_2$<br>CH$_3$ | 533 |
| 16 | " | 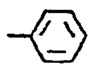 | $C_2H_4OCH_3$ | 534 |
| 17 | " | 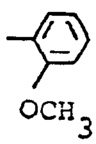 | " | 530,5 |
| 18 | " | 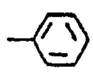 | $C_3H_6OCH_3$ | 535,5 |
| 19 | " | 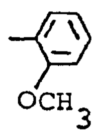 | " | 531,5 |
| 20 | " | 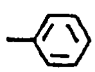 | $C_3H_6OC_2H_4OC_6H_5$ | 535 |
| 21 | " | 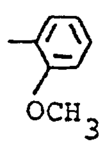 | " | 531 |
| 22 | " | 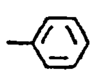 | C$_2$H$_5$<br>C$_3$H$_6$OCH$_2$CHC$_4$H$_9$ | 534,5 |
| 23 | " | 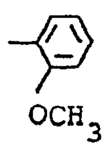 | " | 530,5 |
| 24 | " | " | H | 526,5 |
| 25 | " | 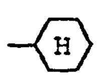 | 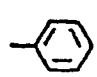 | 535 |

| Bsp. Nr. | B | $B^1$ | $B^2$ | λ max. |
|---|---|---|---|---|
| 26 | 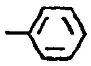 | 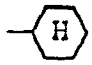 | 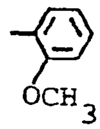 | 533 |
| 27 | " | 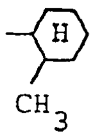 | " | 532 |
| 28 | 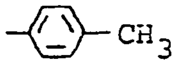 | 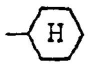 | 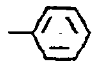 | 535,5 |
| 29 | 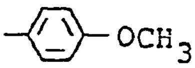 | " | " | 535,5 |
| 30 | " | " | 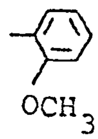 | 532,5 |
| 31 | 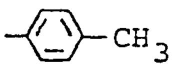 | 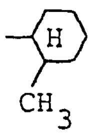 | 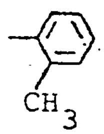 | 527,5 |
| 32 | 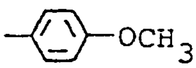 | " | " | 527 |
| 33 | 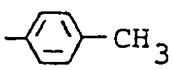 | 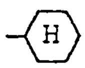 | " | 528 |
| 34 | 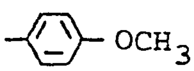 | " | " | 528 |
| 35 | 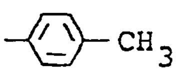 | 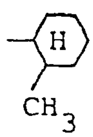 | 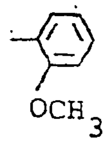 | 531,5 |
| 36 | 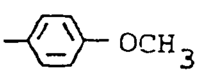 | " | " | 532 |
| 37 | 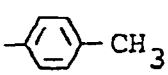 | 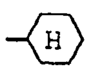 | " | 532,5 |
| 38 | 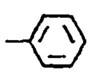 | $C_2H_4OCH_3$ | 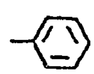 | 533 |

| Bsp. Nr. | B | $B^1$ | $B^2$ | $\lambda_{max.}$ |
|---|---|---|---|---|
| 39 | 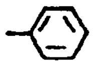 | $C_3H_6OCH_3$ | 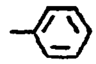 | 534 |
| 40 | 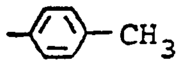 | $CH-CH_2-OCH_3$<br>$\vert$<br>$C_2H_5$ | 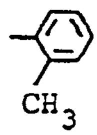 | 526,5 |
| 41 | 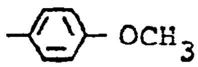 | $C_2H_5$<br>$\vert$<br>$CH-CH_2OCH_3$ | " | 527 |
| 42 | 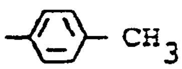 | " | 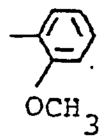 | 531 |
| 43 | 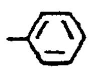 | $CH_3$<br>$\vert$<br>$CH-C_3H_6CH(CH_3)_2$ | 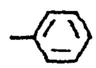 | 532 |
| 44 | 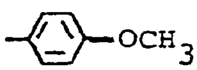 | " | " | 532 |
| 45 | 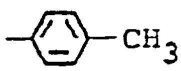 | " | 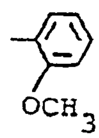 | 531,5 |
| 46 | " | 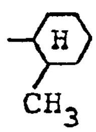 | 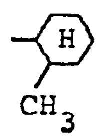 | 521,5 |
| 47 | 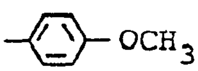 | " | " | 522 |
| 48 | 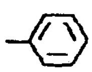 | 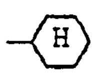 | $CH_3$<br>$\vert$<br>$CH-CH_2-OCH_3$ | 522 |
| 49 | " | " | $CH(CH_3)_2$ | 522,5 |
| 50 | " | " | $CH-CH_2-OCH_3$<br>$\vert$<br>$C_2H_5$ | 521,5 |
| 51 | 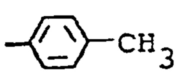 | 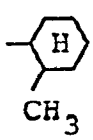 | $CH_3$<br>$\vert$<br>$CH-C_3H_6CH(CH_3)_2$ | 522,5 |

| Bsp. Nr. | B | $B^1$ | $B^2$ | $\lambda$ max. |
|---|---|---|---|---|
| 52 | 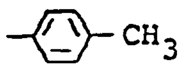 | 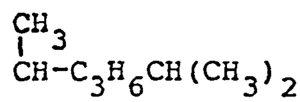 | $CH(CH_3)_2$ | 522 |
| 53 | " | 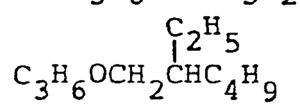 | H | 510 |
| 54 | 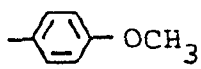 | " | H | 510 |
| 55 | 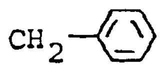 | " | H | 508 |
| 56 | 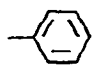 | 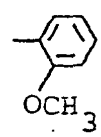 | 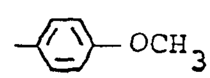 | 540,5 |

**Beispiel 57**

27 Teile des Kupplungsproduktes aus 5-Amino-4-cyan-3-phenyl-isothiazol und 2-(2-Methoxi)-phenylamino-3-cyan-4-methyl-6-(ß-hydroxi)-ethylamino-pyridin werden in einer Mischung aus 500 Raumteilen Monochlorbenzol, 12 Teilen Phenoxiessigsäure und 2,5 Teilen p-Toluolsulfonsäure 3 Stunden bei 100 °C gerührt, bis ein DC. vollständige Umsetzung anzeigt. Das Umsetzungsprodukt der Formel

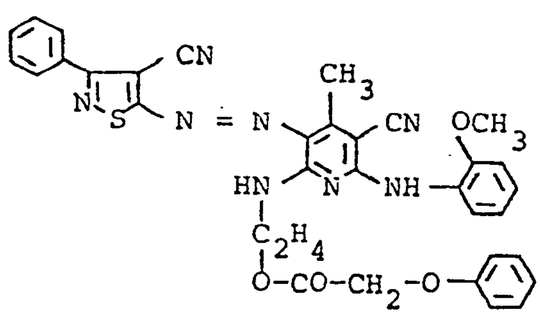

($\lambda$ max. = 530 nm)
wird nach dem Erkalten des Reaktionsgemisches abgesaugt, mit Methanol und mit Wasser gewaschen und ergibt nach den Färbebedingungen des Beispiels 1 eine brillante, blaustichige Rotfärbung mit vergleichbaren Echtheiten.

**Beispiel 58**

16,2 Teile 2-(2-Methoxi)-phenylamino-3-cyan-4-methyl-5-(3-phenyl-4-cyan)-isobenzthiazolyl-5'-azo-6-(2-hydroxi-1-ethyl)-ethylaminopyridin werden in 150 Raumteilen Pyridin bei 50° C angerührt und tropfenweise mit 13 Teilen Benzoylchlorid versetzt. Bis zur vollständigen Veresterung wird bei 50° C nachgerührt. Durch Absaugen bei Raumtemperatur, Waschen mit Ethanol und mit Wasser wird der Farbstoff der Formel

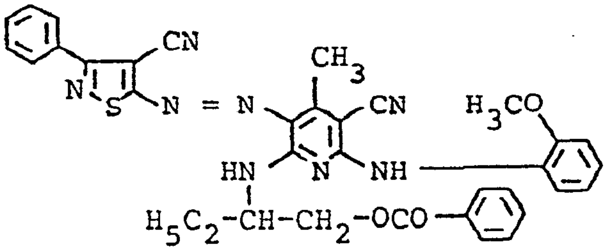

erhalten, der polyester-Baumwolle-Mischungen mit dem Beispiel 1 vergleichbaren Ergebnissen färbt.

**Beispiel 59**

16,5 Teile des Farbstoffes aus 3-(4-Methoxi)-phenyl-4-cyan-5-amino-isothiazol und 2-(2-Methoxi)-phenylamino-3-cyan-9-methyl-6 -(2-hydroxi-1-ethyl)-ethylamino-pyridin werden in 300 Raumteilen Monochlorbenzol bei 100 °C angerührt. Durch Eintropfen von 12 Teilen Phenylisocyanat und 5-stündiges Rühren bei 100 °C wird die Reaktion zu Ende geführt. Man saugt heiß ab, wäscht mit Ethanol und erhältso den Farbstoff der Formel

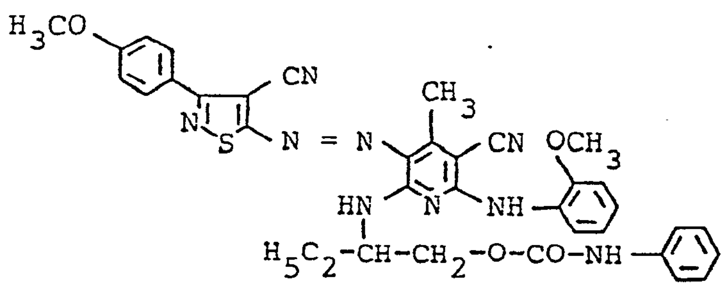

der Polyester-Baumwolle-Mischungen in brillantem, blaustichigem Rotton färbt.

**Beispiel 60**

7 Teile 3-Methyl-4-cyan-5-amino-isothiazol werden bei 0°C bis +5 °C in ein Gemisch aus 40 Raumteilen Eisessig, 20 Teilen 85 %iger Schwefelsäure und 16 Teilen Nitrosylschwefelsäure (11,5 5 $N_2O_3$) eingetragen. Nach 3-stündigem Rühren bis 0/5 °C wird überschüssige salpetrige Säure mit 3 Teilen Harnstoff zerstört. Die erhaltene Diazolösung läßt man nun bei 0/5°C in eine Lösung aus 16,5 Teilen 2-(2-Phenoxi-3-ethoxi)-propylamino-3-cyan-4-methyl-6-amino-pyridin in 200 Raumteilen Essigsäure und 60 Raumteilen Wasser einfließen. Nach zwei Stunden ist die Kupplung beendet. Man saugt ab, wäscht mit 70 %iger Essigsäure und trocknet bei 80° C. Man erhält so den Farbstoff der Formel

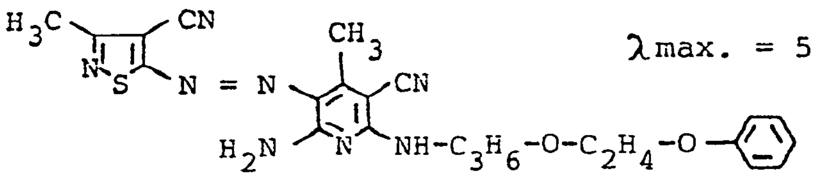

λmax. = 506 nm

als dunkelrotes Pulver, der Polyestermaterial in Orangetönen mit sehr guten Gebrauchsechtheiten färbt.

Analog den Herstellungsbedingungen der Beispiele 1, 2 oder 60 werden die folgenden Dispersionsfarbstoffe erhalten. Davon eignen sich diejenigen Produkte, welche frei von aromatischen oder stark polaren Substituenten sind, bevorzugt als Transferfarbstoffe.

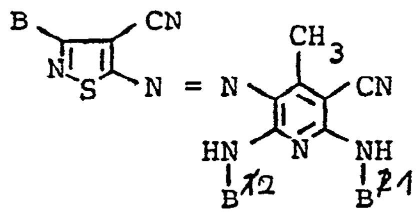

| Bsp. Nr. | B | $B^1$ | $B^2$ | λmax. |
|---|---|---|---|---|
| 61 | $CH_3$ | $C_2H_4OCH_3$ | $C_2H_4OCH_3$ | 514 |
| 62 | " | $C_3H_6OCH_3$ | $C_3H_6OCH_3$ | 516,5 |
| 63 | " | $CH-CH_2OCH_3$<br>$C_2H_5$ | $CH-CH_2OCH_3$<br>$C_2H_5$ | 516,5 |
| 64 | " | $C_2H_5$ | $C_2H_5$ | 516 |
| 65 | " | " | $C_2H_4OCH_3$ | 515 |
| 66 | " | " | $C_3H_6OCH_3$ | 515 |
| 67 | $CH_2$ 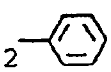 | $C_2H_5$<br>$C_3H_6OCH_2CH-C_4H_9$ | H | 509 |
| 68 | " | $C_2H_4OC_4H_9$ | H | 508,5 |
| 69 | 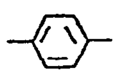 $OCH_3$ | " | H | 510,5 |
| 70 | $CH_2$ 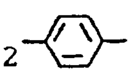 $OCH_3$ | $C_2H_4OCH_3$ | H | 509 |
| 71 | $CH_2$ 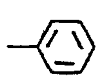 | " | $C_2H_4OCH_3$ | 517 |
| 72 | 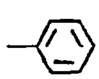 | " | " | 519 |
| 73 | $CH_2$ 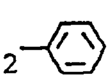 | $C_3H_6OCH_3$ | $C_3H_6OCH_3$ | 519 |

| Bsp. Nr. | B | $B^1$ | $B^2$ | λ max. |
|---|---|---|---|---|
| 74 | 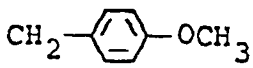 | $C_4H_9$ | H | 509 |
| 75 | 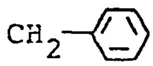 | 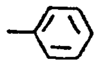 | $C_3H_6OCH_3$ | 530 |
| 76 | $CH(CH_3)_2$ | " | " | 528 |
| 77 | 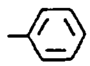 | " | " | 532 |
| 78 | $CH_3$ | " | " | 528 |
| 79 | " | 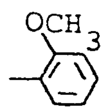 | " | 531 |
| 80 | 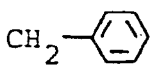 | " | $C_2H_4OCH_3$ | 529,5 |
| 81 | " | " | $C_2H_5$<br>$CH-CH_2-OCH_3$ | 529 |
| 82 | $CH_3$ | $C_3H_6OCH_3$ | $C_2H_4OH$ | 516 |
| 83 | 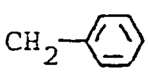 | " | " | 518 |
| 84 | 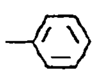 | " | " | 520 |
| 85 | $CH_3$ | 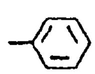 | " | 526 |
| 86 | " | " | $C_3H_6OH$ | 528 |
| 87 | " | 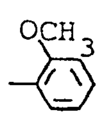 | " | 531 |

| Bsp. Nr. | B | $B^1$ | $B^2$ | max. |
|---|---|---|---|---|
| 88 | $CH_3$ | 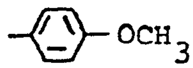 | $C_3H_6OH$ | 535 |
| 89 | " | " | $CH(CH_3)_2$ | 535,5 |
| 90 | " | 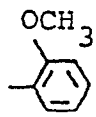 | $C_2H_4OH$ | 528,5 |
| 91 | " | " | $CH(CH_3)_2$ | 531 |
| 92 | 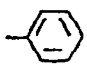 | " | H | 525 |
| 93 | $CH_3$ | " | H | 521 |
| 94 | 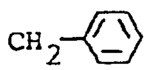 | 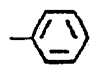 | H | 527 |
| 95 | $CH(CH_3)_2$ | 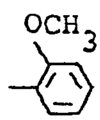 | H | 521,5 |
| 96 | $CH_3$ | 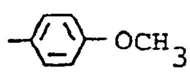 | H | 529 |
| 97 | " | 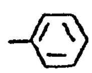 | $C_3H_6OC_4H_8OH$ | 527 |
| 98 | " | 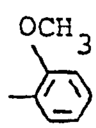 | " | 528 |
| 99 | " | 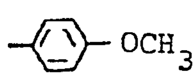 | " | 532 |
| 100 | " | 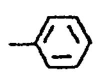 | $C_3H_6OC_2H_4OC_6H_5$ | 528 |

| Bsp. Nr. | B | $B^1$ | $B^2$ | λ max. |
|---|---|---|---|---|
| 101 | $CH_3$ | 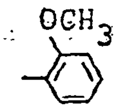 | $C_3H_6OC_2H_4OC_6H_5$ | 531 |
| 102 | " | 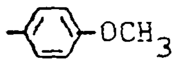 | " | 532 |
| 103 | " | 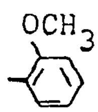 | $C_2H_5$<br>$C_3H_6OCH_2CHC_4H_9$ | 531 |

Analog zu den beschriebenen Methoden wurden auch die folgen Farbstoffe hergestellt:

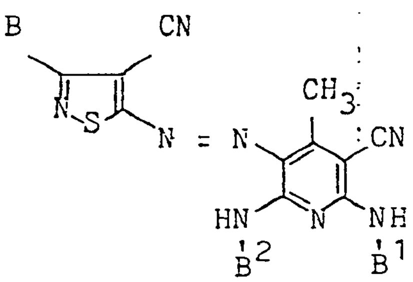

| Bsp. Nr. | B | $B^1$ | $B^2$ | λ max. |
|---|---|---|---|---|
| 104 | 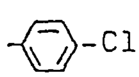 | 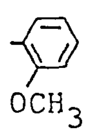 | 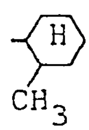 | 530,5 |
| 105 | 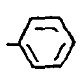 | " | 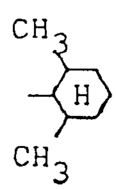 | 532,5 |

| Bsp. Nr. | B | $B^1$ | $B^2$ | λ max. |
|---|---|---|---|---|
| 106 | 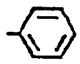 | 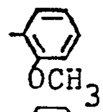 | 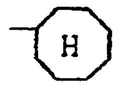 | 532 |
| 107 | " | 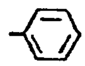 | 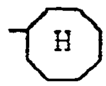 | 536 |
| 108 | " | " | 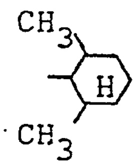 | 535,5 |
| 109 | 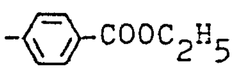 | 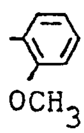 | 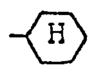 | 533 |
| 110 | 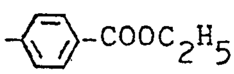 | " | 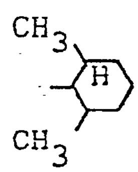 | 532,5 |
| 111 | 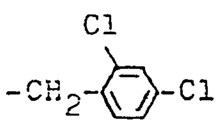 | " | 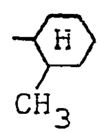 | 530 |
| 112 | 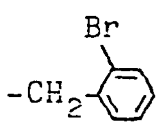 | " | " | 529 |
| 113 | 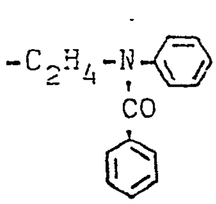 | 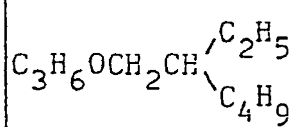 | H | 507,5 |
| 114 | 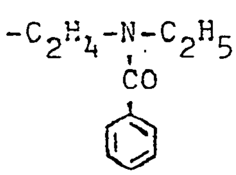 | 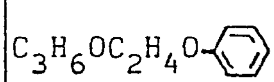 | H | 508 |

**Patentansprüche**

1. Isothiazolazofarbstoffe der allgemeinen Formel 1

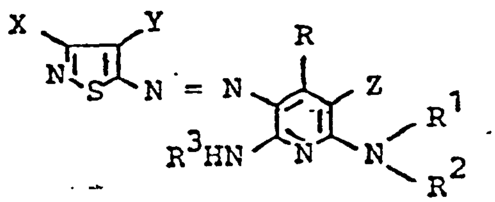

in der
X gegebenenfalls substituiertes Alkyl, Cycloalkyl, Aralkyl oder Aryl,
Y Chlor, Brom, Carbamoyl oder Cyan,
Z Wasserstoff, Carbamoyl, Cyan oder Acetyl,
R Wasserstoff oder $C_1$- bis $C_3$-Alkyl,
$R^1$ und $R^3$ unabhängig voneinander Wasserstoff oder gegebenenfalls substituiertes Alkyl, Alkenyl, Cycloalkyl, Aralkyl oder Aryl,
$R^2$ WaSserstoff oder gegebenenfalls substituiertes Alkyl und
$R^1$ und $R^2$ zusammen mit dem Stickstoff ein gesättigter 5- oder 6-Ring sind.

2. Verbindungen gemäß Anspruch 1, bei denen X $C_1$- bis $C_4$-Alkyl oder gegebenenfalls durch Methyl, Ethyl, Methoxy, Ethoxy, Chlor, Brom oder$C_1$-bis $C_4$-Alkoxycarbonyl substituiertes Benzyl oder Phenyl ist.

3. Verbindungen gemäß Anspruch 1, bei denen Y Cyan oder Carbamoyl ist.

4. Verbindungen gemäß Anspruch 1, bei denen R Wasserstoff oder Methyl ist.

5. Verbindungen gemäß Anspruch 1, bei denen Z Carbamoyl oder Cyan ist.

6. Verbindungen gemäß Anspruch 1, bei denen $R^2$ Wasserstoff ist.

7. Verbindungen gemäß Anspruch 1, bei denen $R^1$ und $R^3$ unabhängig voneinander gegebenenfalls durch Sauerstoff unterbrochenes und gegebenenfalls durch Hydroxy, $C_1$- bis $C_8$-Alkoxy, Phenoxy oder Phenyl substituiertes $C_1$- bis $C_8$-Alkyl, $C_5$- bis $C_8$-Cycloalkyl oder gegebenenfalls durch Chlor, Brom, Methyl, Ethyl, Methoxy oder Ethoxy substituiertes Phenyl sind.

8. Farbstoffe gemäß Anspruch 1 der Formel

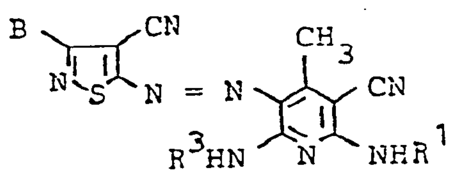

in der
B Methyl, Isopropyl oder gegebenenfalls durch Methyl, Methoxy, Chlor oder Brom substituiertes Benzyl oder Phenyl ist und
$R^1$ und $R^3$ die angegebene Bedeutung haben.

9. Verwendung der Farbstoffe gemäß Anspruch 1 zum Färben textiler Fasern.

10. Verwendung der Farbstoffe gemäß Anspruch 1 zum Färben von Thermoplasten.

**Claim**

1. An isothiazolylazo dye of the general formula 1

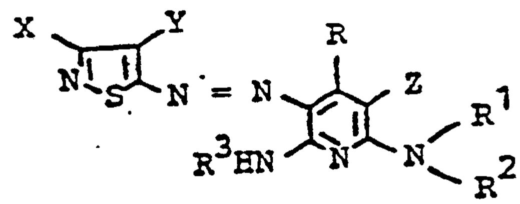

where
X is unsubstituted or substituted alkyl, cycloalkyl, aralkyl or aryl,
Y is chlorine, bromine, carbamyl or cyano,
Z is hydrogen, carbamyl, cyano or acetyl,
R is hydrogen or $C_1$-$C_3$-alkyl,
$R^1$ and $R^3$ independently of one another are each hydrogen or unsubstituted or substituted alkyl, alkenyl, cycloalkyl, aralkyl or aryl,
$R^2$ is hydrogen or unsubstituted or substituted alkyl, and
$R^1$ and $R^2$, together with the nitrogen atom, form a saturated 5-membered or 6-membered ring.

1. A compound as claimed in claim 1, wherein X is $C_1$-$C_4$-alkyl, or is phenyl or benzyl which is unsubstituted or substituted by methyl, ethyl, methoxy, ethoxy, chlorine, bromine or $C_1$-$C_4$-alkoxycarbonyl.

3. A compound as claimed in claim 1, wherein Y is cyano or carbamyl.

4. A compound as claimed in claim 1, wherein R is hydrogen or methyl.

5. A compound as claimed in claim 1, wherein Z is carbamyl or cyano.

6. A compound as claimed in claim 1, wherein $R^2$ is hydrogen.

7. A compound as claimed in claim l, wherein $R^1$ and $R^3$ independently of one another are each $C_1$-$C_8$-alkyl which may or may not be interrupted by oxygen and which is unsubstituted or substituted by hydroxyl, $C_1$-$C_8$-alkoxy, phenoxy or phenyl, or are each $C_5$-$C_8$-cycloalkyl, or phenyl which is unsubstituted or substituted by chlorine, bromine, methyl, ethyl, methoxy or ethoxy.

8. A dye as claimed in claim 1, of the formula

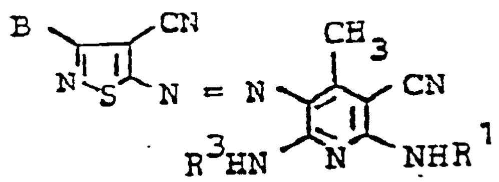

where
B is methyl or isopropyl or is phenyl or benzyl which is unsubstituted or substituted by methyl, methoxy, chlorine or bromine, and
$R^1$ and $R^3$ have the above meanings.

9. The use of a dye as claimed in claim 1 for dyeing textile fibres.

10. The use of a dye as claimed in claim 1 for dyeing thermoplastics.

**Revendications**

1. Colorants azoïques de la série isothiazole de formule générale I

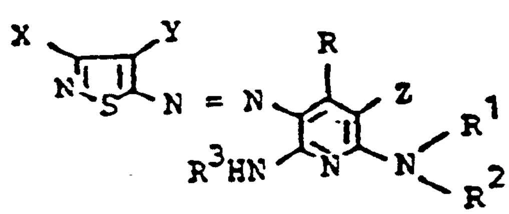

dans laquelle
X est un radical alkyle, cycloalkyle, aralkyle ou aryle éventuellement substitué,
Y est un atome de chlore, de brole, un radical carbamoyle ou cyano,

Z est un atome d'hydrogène, un radical carbamoyle, cyano ou acétyle,

R est un atome d'hydrogène ou un radical alkyle en $C_1$ à $C_3$,

$R^1$ et $R^3$, indépendamment l'un de l'autre, représentent chacun un atome d'hydrogène ou un radical alkyle, alcényle, cycloalkyle, aralkyle ou aryle éventuellement substitué,

$R^2$ est un atome d'hydrogène ou un radical alkyle éventuellement substitué et

$R^1$ et $R^2$ forment, avec l'atome d'azote, un noyau penta- ou hexavalent saturé.

2. Composés selon la revendication 1, dans lesquels X est un radical alkyle en $C_1$ à $C_4$ ou un radical benzyle ou phényle éventuellement substitué par un groupement méthyle, éthyle, méthoxy, éthoxy, un atome de chlore, de brome ou un groupement $C_1$-$C_4$-alcoxycarbonyle.

3. Composés selon la revendication 1, dans lesquels Y est un radical cyano ou carbamoyle.

4. Composés selon la revendication 1, dans lesquels R est un atome d'hydrogène ou un radical méthyle.

5. Composés selon la revendication 1, dans lesquels Z est un radical carbamoyle ou cyano.

6. Composés selon la revendication 1, dans lesquels $R^2$ est un atome d'hydrogène.

7. Composés selon la revendication 1, dans lesquels $R^1$ et $R^3$, indépendamment l'un de l'autre, représentent chacun un radical alkyle en $C_1$ à $C_8$ éventuellement interrompu par un atome d'oxygène et éventuellement substitué par un groupement hydroxy, alcoxy en $C_1$ à $C_8$, phénoxy ou phényle, un radical cycloalcoyle en $C_5$ à $C_8$ ou un radical phényle éventuellement substitué par un atome de chlore, de brome, un groupement méthyle, éthyle, méthoxy ou éthoxy.

8. Colorants selon la revendication 1 de formule

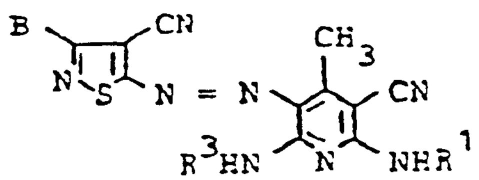

dans laquelle

B est un radical méthyle, isopropyle ou un radical benzyle ou phényle éventuellement substitué par un groupement méthyle, méthoxy ou un atome de chlore ou de brome et

$R^1$ et $R^3$ ont les significations déjà indiquées.

9. Utilisation des colorants selon la revendication 1 pour la teinture de fibres textiles.

10. Utilisation des colorants selon la revendication 1 pour la coloration de matières thermoplastiques.